**Europäisches Patentamt**

**European Patent Office**

**Office européen des brevets**

(19)

(11) Veröffentlichungsnummer: **0 005 746**
**B1**

(12)

# EUROPÄISCHE PATENTSCHRIFT

(45) Veröffentlichungstag der Patentschrift:
05.08.81

(51) Int. Cl.³: **C 07 F 9/50**

(21) Anmeldenummer: **79101396.4**

(22) Anmeldetag: **08.05.79**

(54) Verfahren zur Herstellung von Triphenylphosphin.

(30) Priorität: **02.06.78 CH 6071/78**

(43) Veröffentlichungstag der Anmeldung:
**12.12.79 Patentblatt 79/25**

(45) Bekanntmachung des Hinweises auf die Patenterteilung:
**05.08.81 Patentblatt 81/31**

(84) Benannte Vertragsstaaten:
**AT BE CH DE FR GB IT NL**

(56) Entgegenhaltungen:
**FR-A-1 423 378**

**ANGEWANDTE CHEMIE, Band 89, Nr. 8, 1977, Seite 558**

**ZEITSCHRIFT FÜR ANORGANISCHE ALLGEMEINE CHEMIE, Band 369, 1969, Seiten 33–37**

(73) Patentinhaber: **F. HOFFMANN-LA ROCHE & CO.
Aktiengesellschaft, CH-4002 Basel (CH)**

(72) Erfinder: **Broger, Emil Albin, Dr., Obere Egg 11,
CH-4465 Magden (CH)**

(74) Vertreter: **Kerr, Andrew et al,
Grenzacherstrasse 124 Postfach 601, CH-4002 Basel
(CH)**

Verfahren zur Herstellung von Triphenylphosphin

Das als Reagens für Polyensynthesen verwendbare Triphenylphosphin kann bekanntlich durch Regenerierung des bei solchen Polyensynthesen entstehenden Triphenylphosphinoxids wiedergewonnen werden.

Ein derartiges bekanntes Verfahren besteht beispielsweise darin, dass man das Triphenylphosphinoxid in einer ersten Stufe mit Phosgen in Chloroform zu einem Triphenylphosphindichlorid-Chloroformaddukt der Formel $(C_6H_5)_3PCl_2 \cdot CHCl_3$ umsetzt und dieses in einer zweiten Stufe durch Erhitzen mit weissem Phosphor zum Triphenylphosphin reduziert. Dieses Verfahren ist mit den mit der Verwendung von Phosphor verbundenen Nachteilen belastet.

Ein weiteres bekanntes Verfahren zur Wiedergewinnung von Triphenylphosphin aus Triphenylphosphinoxid besteht in der Chlorierung des Triphenylphosphinoxids und Reduktion des dabei erhaltenen Triphenylphosphindichlorids. Die Chlorierung des Triphenylphosphinoxids, beispielsweise mit Phosgen, wird hierbei in Lösungsmitteln, wie chlorierten Kohlenwasserstoffen, z.B. Tetrachlorkohlenstoff, durchgeführt, während man die Reduktion des erhaltenen Triphenylphosphindichlorids mit Wasserstoff in Toluol ausführt. Hierbei ist es von grosser Wichtigkeit, dass aus dem bei der Umsetzung mit Phosgen erhaltenen Triphenylphosphindichlorid vor der Reduktionsstufe der Tetrachlorkohlenstoff zur Gänze entfernt wird, da dieser mit dem bei der Reduktion entstehenden Triphenylphosphin reagieren würde. Dieses Verfahren ist somit mit einer umständlichen Entfernung des Lösungsmittels aus dem als Zwischenprodukt anfallenden Triphenylphosphindichlorid verbunden.

Es wurde nun gefunden, dass man diesen Nachteil vermeiden und ausserdem die Reduktionsreaktion günstiger durchführen kann, wenn man erfindungsgemäss die Reduktion des bei der Umsetzung des Triphenylphosphinoxids mit Phosgen in Chloroform erhaltenen Triphenylphosphindichlorid-Chloroformadduktes mit Wasserstoff in Gegenwart von Chloroform als Lösungsmittel oder in Abwesenheit eines Lösungsmittels durchführt.

Das erfindungsgemässe Verfahren bietet den Vorteil, dass eine Entfernung des in der ersten Stufe verwendeten Lösungsmittels vor der Reduktion überflüssig wird. Ferner hat es sich erwiesen, dass Chloroform ein besseres Lösungsmittel für die Reduktion des Triphenylphosphindichlorids darstellt als Toluol. Methylenchlorid und Tetrachlorkohlenstoff sind für diese Hydrogenolyse ungeeignet.

Die Umsetzung des Triphenylphosphinoxids mit dem Phosgen kann in Gegenwart von etwa zwei bis drei Gewichtsteilen Chloroform pro Gewichtsteil Oxid durchgeführt werden.

Für die Chlorierungsreaktion werden zweckmässig stöchiometrische Mengen von Triphenylphosphinoxid und Phosgen verwendet, bzw. ein geringer Überschuss an Phosgen.

Die Reaktionstemperatur für die Chlorierungsreaktion ist im wesentlichen unkritisch, zweckmässig arbeitet man bei Raumtemperatur.

Die Reaktionszeit für die Chlorierungsreaktion beträgt etwa ½–2 Stunden.

Das in der ersten Stufe erhaltene Triphenylphosphindichlorid-Chloroformaddukt wird abfiltriert, mit Chloroform gewaschen und feucht, ohne vorhergehendes Trocknen, in Chloroform suspendiert und der Reduktion zugeführt. Es kann aber auch das in der ersten Stufe des Verfahrens erhaltene Reaktionsgemisch direkt der Reduktion unterworfen werden und weiters kann das aus dem Reaktionsgemisch abfiltrierte Addukt direkt in Abwesenheit eines Lösungsmittels reduziert werden. Die Reduktion wird vorzugsweise in Gegenwart von kleinen Mengen, z.B. bis zu 5 Mol%, Phosgen durchgeführt.

Die Reduktion des Triphenylphosphindichlorid-Chloroformaddukts wird zweckmässig mit Wasserstoff unter Druck durchgeführt. Der Druck beträgt hierbei etwa 10–100 bar und mehr, z.B. 200 oder 300 bar, vorzugsweise aber etwa 100 bar.

Die bei der Reduktion angewandte Temperatur beträgt normalerweise mehr als 130°C, zweckmässig etwa 160–220°C, vorzugsweise etwa 190–195°C.

Die Reaktionszeit hängt vom Druck und der Temperatur ab und liegt im allgemeinen zwischen wenigen Minuten und einigen Stunden.

Die Reduktion wird zweckmässig mit einer Lösung des Triphenylphosphindichlorid-Chloroformaddukts in Chloroform durchgeführt, wobei die Konzentration der Lösung 5–75%, vorzugsweise 10–20%, bezogen auf freies Triphenylphosphindichlorid, beträgt.

Das für die Reduktion verwendete Reaktionsgefäss soll eine Innenbeschichtung von Glas, Teflon, Tantal oder Platin aufweisen.

Das erfindungsgemässe Verfahren kann sowohl absatzweise, als auch kontinuierlich durchgeführt werden.

Beispiel 1

Zu einer Lösung von 139 g Triphenylphosphinoxid in 150 ml Chloroform wird eine Lösung von 52 g Phosgen in 100 ml Chloroform innert 2 Stunden bei 20°C zugetropft. Die Suspension wird 1 Stunde bei 20° und 1 Stunde bei 0° gerührt. Das dabei gebildete Triphenylphosphindichlorid-Chloroformaddukt [$(C_6H_5)_3PCl_2 \cdot CHCl_3$] wird abfiltriert und mit Chloroform gewaschen. Das feuchte Produkt wird in 1 Liter Chloroform suspendiert und in einem Glaseinsatz eines Autoklaven bei 180° und 100 bar Wasserstoff während 1 Stunde hydriert. Die Reaktionslösung wird eingedampft und der Rückstand aus Methanol umkristallisiert. Ausbeute 106 g Triphenylphosphin, Smp. 80–81°. Das in der Mutterlauge enthaltene Triphenylphosphin und Triphenylphosphinoxid wird recyclisiert.

Beispiel 2

18,1 g Triphenylphosphindichlorid-Chloroformaddukt werden bei 180° und 100 bar $H_2$ 1 Stunde hydriert. Ausbeute 8,2 g Triphenylphosphin.

Beispiel 3

18,1 g Triphenylphosphindichlorid-Chloroformaddukt werden in 100 ml Chloroform bei 160° und 20 bar $H_2$ während 9 Stunden hydriert. Ausbeute 8,8 g Triphenylphosphin.

Beispiel 4

Eine Suspension von 18,1 g Triphenylphosphindichlorid-Chloroformaddukt in 50 ml Chloroform wird bei 180° und 20 bar während 3 Stunden hydriert. Ausbeute 9,0 g Triphenylphosphin.

Beispiel 5

Eine Suspension von 181 g Triphenylphosphindichlorid-Chloroformaddukt in 1 Liter Chloroform wird unter 20 bar Stickstoff auf 190° erhitzt. Dann werden 100 bar Wasserstoff aufgepresst und während 15 Minuten bei 190–195° hydriert. Ausbeute 93,3 g Triphenylphosphin.

Beispiel 6

Eine Suspension von 18,1 g Triphenylphosphindichlorid-Chloroformaddukt und 1 ml Phosgen in 90 ml Chloroform wird bei 90 bar $H_2$ und 180° während 1 Stunde hydriert. Die Lösung wird eingedampft und der Rückstand an Kieselgel chromatographiert. Mit Benzol werden 10,1 g Triphenylphosphin, Smp. 80–81°, eluiert.

Beispiel 7

90,5 g Triphenylphosphindichlorid-Chloroformaddukt werden in 50 ml Chloroform bei 140 °C und 100 bar $H_2$ während 9 Stunden hydriert. Ausbeute 43,5 g Triphenylphosphin.

## Patentansprüche

1. Verfahren zur Herstellung von Triphenylphosphin durch Umsetzung von Triphenylphosphinoxid mit Phosgen in Chloroform und Reduktion des erhaltenen Triphenylphosphindichlorid-Chloroformadduktes, dadurch gekennzeichnet, dass man die Reduktion des Triphenylphosphindichlorid-Chloroformadduktes mit Wasserstoff in Gegenwart von Chloroform als Lösungsmittel oder in Abwesenheit eines Lösungsmittels durchführt.

2. Verfahren nach Anspruch 1, dadurch gekennzeichnet, dass man die Umsetzung des Triphenylphosphinoxids mit Phosgen in Gegenwart von etwa 2–3 Gewichtsteilen Chloroform pro Gewichtsteil Oxid durchführt.

3. Verfahren nach Anspruch 1 oder 2, dadurch gekennzeichnet, dass man die Reduktion in einer Lösung des Triphenylphosphindichlorid-Chloroformaddukts durchführt, wobei die Konzentration der Lösung 5–75%, bezogen auf freies Triphenylphosphindichlorid, beträgt.

4. Verfahren nach einem der Ansprüche 1–3, dadurch gekennzeichnet, dass man die Reduktion in einer Lösung des Triphenylphosphindichlorid-Chloroformaddukts durchführt, wobei die Konzentration der Lösung 10–20%, bezogen auf freies Triphenylphosphindichlorid, beträgt.

5. Verfahren nach einem der Ansprüche 1–4, dadurch gekennzeichnet, dass man die Reduktion bei einer Temperatur von mehr als 130 °C durchführt.

6. Verfahren nach einem der Ansprüche 1–5, dadurch gekennzeichnet, dass man die Reduktion bei einer Temperatur von 160–220 °C durchführt.

7. Verfahren nach einem der Ansprüche 1–6, dadurch gekennzeichnet, dass man die Reduktion bei einer Temperatur von 190–195 °C durchführt.

8. Verfahren nach einem der Ansprüche 1–7, dadurch gekennzeichnet, dass man die Reduktion in Gegenwart von bis zu 5 Mol% Phosgen durchführt.

9. Verfahren nach einem der Ansprüche 1–8, dadurch gekennzeichnet, dass man die Reduktion unter einem Druck von etwa 10 bis etwa 100 bar durchführt.

## Claims

1. A process for the production of triphenylphosphine by reaction of triphenylphosphine oxide with phosgene in chloroform and reduction of the so obtained triphenylphosphine dichloride-chloroform adduct, characterised in that the reduction of the triphenylphosphine dichloride-chloroform adduct is carried out with hydrogen in the presence of chloroform as solvent or in the absence of a solvent.

2. A process according to claim 1, characterised in that the reaction of triphenylphosphine oxide with phosgene is carried out in the presence of about 2–3 parts by weight of chloroform per part of oxide.

3. A process according to claim 1 or 2, characterised in that the reduction is carried out in a solution of the triphenylphosphine dichloride-chloroform adduct whereby the concentration of the solution is 5–75% calculated on the basis of free triphenylphosphine dichloride.

4. A process according to one of claims 1 to 3, characterised in that the reduction is carried out in a solution of the triphenylphosphine dichloride-chloroform adduct, whereby the concentration of the solution is 10–20% calculated on the basis of free triphenylphosphine dichloride.

5. A process according to one of claims 1 to 4, characterised in that the reduction is carried out at a temperature of more than 130 °C.

6. A process according to one of claims 1 to 5, characterised in that the reduction is carried out at a temperature of from 160 to 220 °C.

7. A process according to one of claims 1 to 6, characterised in that the reduction is carried out at a temperature of from 190 to 195 °C.

8. A process according to one of claims 1 to 7, characterised in that the reduction is carried out in the presence of up to 5 mol% of phosgene.

9. A process as claimed in one of claims 1 to 8, characterised in that the reduction is carried out under a pressure of from about 10 to about 100 bar.

**Revendications**

1. Procédé de préparation de la triphénylphosphine par réaction de l'oxyde de triphénylphosphine avec le phosgène dans le chloroforme et réduction du produit d'addition de dichlorure de triphénylphosphine et de chloroforme obtenu, caractérisé en ce que la réduction du produit d'addition de dichlorure de triphénylphosphine et de chloroforme est effectuée avec de l'hydrogène en présence de chloroforme servant de solvant ou en l'absence de solvant.

2. Procédé selon la revendication 1, caractérisé en ce que la réaction de l'oxyde de triphénylphosphine avec le phosgène est effectuée en présence d'environ 2 à 3 parties en poids de chloroforme par partie en poids d'oxyde.

3. Procédé selon l'une des revendications 1 ou 2, caractérisé en ce que l'on effectue la réduction dans une solution du produit d'addition de dichlorure de triphénylphosphine et de chloroforme à une concentration de 5 à 75% exprimée en dichlorure de triphénylphosphine libre.

4. Procédé selon l'une des revendications 1 à 3, caractérisé en ce que l'on effectue la réduction sur une solution de produit d'addition de dichlorure de triphénylphosphine et de chloroforme à une concentration de 10 à 20% exprimée en dichlorure de triphénylphosphine libre.

5. Procédé selon l'une des revendications 1 à 4, caractérisé en ce que l'on effectue la réduction à une température supérieure à 130°C.

6. Procédé selon l'une des revendications 1 à 5, caractérisé en ce que l'on effectue la réduction à une température de 160 à 220°C.

7. Procédé selon l'une des revendications 1 à 6, caractérisé en ce que l'on effectue la réduction à une température de 190 à 195°C.

8. Procédé selon l'une des revendications 1 à 7, caractérisé en ce que l'on effectue la réduction en présence d'une quantité de phosgène allant jusqu'à 5 moles%.

9. Procédé selon l'une des revendications 1 à 8, caractérisé en ce que l'on effectue la réduction sous une pression d'environ 10 à 100 bars.